**Europäisches Patentamt**

**European Patent Office**

**Office européen des brevets**

(19)

(11) Veröffentlichungsnummer: **0 149 702**

**A2**

(12)

# EUROPÄISCHE PATENTANMELDUNG

(21) Anmeldenummer: **84105896.9**

(51) Int. Cl.⁴: **C 05 F 5/00**

(22) Anmeldetag: **26.03.80**

(30) Priorität: **27.03.79 AT 2287/79**
**19.06.79 AT 4330/79**

(43) Veröffentlichungstag der Anmeldung:
**31.07.85 Patentblatt 85/31**

(84) Benannte Vertragsstaaten:
**FR**

(60) Veröffentlichungsnummer der früheren
Anmeldung nach Art. 76 EPÜ: **0 026 767**

(71) Anmelder: **Graefe, Gernot, Dr. rer. nat**
**Bergstrasse 6**
**A-7082 Donnerskirchen(AT)**

(72) Erfinder: **Graefe, Gernot, Dr. rer. nat**
**Bergstrasse 6**
**A-7082 Donnerskirchen(AT)**

(74) Vertreter: **Melzer, Wolfgang, Dipl.-Ing. et al,**
**Patentanwälte Dipl.-Ing. H. Mitscherlich Dipl.-Ing. K.**
**Gunschmann Dipl.-Ing. Dr.rer.nat. W. Körber Dipl.-Ing. J.**
**Schmidt-Evers Dipl.-Ing. W. Melzer Steinsdorfstrasse 10**
**D-8000 München 22(DE)**

(54) **Mittel zur Herstellung hochwertigen Düngers, Verfahren zu seiner Herstellung und seine Anwendung.**

(57) Mittel zur Herstellung hochwertigen Düngers oder zur Einleitung bzw. Förderung aerober Verrottungsvorgänge an pflanzlichen oder tierischen Abfallstoffen, das als wirksamen Bestandteil mit Humicola- und/oder Actinomycetensporen behafteten und ihren natürlichen Gehalt an Öl aufweisende Trauben kerne enthält. Bei der Herstellung des Mittels werden Traubentrester einer aeroben Verrottung unterworfen, wobei in einer ersten Phase der Zuckergehalt der Trester in Alkohol umgewandelt und dieser einer Veresterung unterworfen, in einer zweiten Phase durch Umlagerung des Materials und erleichterten Luftzutritt eine Durchdringung des Substrates mit dem Mycel von Humicola und thermophilen Actomycetenarten herbeigeführt und in einer dritten Phase durch neuerliche Umlagerung des Materials in loser Form der mikrobielle Abbau des Mycels bewerkstelligt wird, worauf das Material getrocknet und durch Sieben eine die Kerne enthaltende Fraktion abgetrennt wird. Es kann auch so verfahren werden, daß in einer ersten Phase der Zuckergehalt der Trester in Alkohol umgewandelt und dieser einer Veresterung unterworfen, sodann die Kerne geöffnet und das gesamte, auch die geöffneten Kerne enthaltende Material als Zwischenprodukt in einer zweiten Phase der Verrottung zugeführt wird. Das Mittel kann zur Heißverrottung von Unkraut verwendet werden, oder aber zur Aktivierung der Verrottung einer gehäuft gelagerte Menge pflanzlichen Abfallstoffes dienen. Weiters könne bei der Herstellung von Dünger unter Verwendung des Mittels andere Materialien zugegeben werden.

Man schätzt, daß auf der Erde pro Jahr dreißigmal so viel Energie aus Biomasse frei wird, wie durch alle von Menschenhand erbauten Maschinen. Der biologische Energiefluß geht jedoch meist unauffällig vonstatten. Fein verteilt in der Humusschicht des Bodens oder in den Gewässern wird organische Substanz von Organismen unter Wärmeabgabe wieder in die Ausgangsprodukte zerlegt.

Die Rottevorgänge, die beispielsweise in der Streuschicht des Waldes auf großer Fläche ablaufen, lassen sich konzentrieren. So wird dem Gartenbesitzer empfohlen, Pflanzenabfälle in Mieten von etwa zwei Kubikmetern Rauminhalt zusammenzutragen, um in dieser Konzentration durch das Zusammentreffen vieler Stoff- und Energieumsetzungen entsprechend hohe Wärmegrade und eine lebhafte Rotte zu erzielen. Manche organische Stoffe, wie Stroh oder Holzabfälle, müssen in noch größerer Menge zusammenkommen und benötigen stickstoffhaltige Beimengungen, um eine lebhafte heiße Rotte in Gang zu setzen.

Auf hohem Temperaturniveau laufen die meisten Naturvorgänge schneller ab als auf niedrigem. Das gilt auch für die Humifizierung. Die Hitze, die sich im Zentrum des Komposthaufens aufbaut, zeigt eine lebhafte Stoffwechselaktivität thermophiler Mikroorganismen an. Die hohe Temperatur hat neben der Beschleunigung des Ab- und Umbaues organischer Substanz noch mehrere positive Aspekte: Es wird zu heiß für die Entwicklung von Fruchtfliegen u.a. ungern gesehenen Dipterenarten. Parasitenstadien, Erreger von Pflanzenkrankheiten und pathogene Keime geraten während der heißen Rotte ins Hintertreffen und werden wie Unkrautsamen abgetötet, wenn die Erhitzung stark genug ist und überall hindringt.

Es besteht daher das Bedürfnis nach Substanzen, welche in der Lage sind, den Rottevorgang organischer Materialien in Gang zu setzen, zu fördern und auf höherer Temperatur ablaufen zu lassen. Es ist zu erwarten, daß aus solchen Substanzen besonders hochwertige Dünger hergestellt werden können.

Die Erfindung schlägt vor, die aus Traubentrester durch

0149702

einen aeroben Verrottungsvorgang gewonnenen Traubenkerne
als eine solche fördernde Substanz zu verwenden.

Die Erfindung bezieht sich demnach auf ein Mittel zur
Herstellung hochwertigen Düngers oder zur Einleitung bzw.
Förderung aerober Verrottungsvorgänge an pflanzlichen oder
tierischen Abfallstoffen, das dadurch gekennzeichnet ist,
daß es als wirksamen Bestandteil mit Humicola- und/oder
Actinomycetensporen behaftete und ihren natürlichen Gehalt
an Öl aufweisende Traubenkerne enthält, wobei die Kerne vor
ihrer Anwendung zu öffnen sind. Ferner betrifft die Erfindung ein Verfahren zur Gewinnung dieser Kerne, bei dem
Traubentrester einer aeroben Verrottung unterworfen werden,
wobei in einer ersten Phase der Zuckergehalt der Trester in
Alkohol umgewandelt und dieser einer Veresterung unterworfen,
in einer zweiten Phase durch Umlagerung des Materials und
erleichterten Luftzutritt eine Durchdringung des Substrates
mit dem Mycel von Humicola und Actinomycetenarten herbeigeführt und in einer dritten Phase durch neuerliche Umlagerung
des Materials in loser Form der mikrobielle Abbau des Mycels
bewerkstelligt wird, worauf das Material getrocknet und durch
Sieben eine die Kerne enthaltende Fraktion abgetrennt wird.
Die Kerne können z.B. durch Schroten vor ihrer Verwendung
geöffnet werden.

Das erfindungsgemäße Mittel kann angewendet werden,
indem im Zentrum oder unterhalb desselben einer gehäuft
gelagerten Menge pflanzlicher Abfallstoffe als Ausgangsherd
des Verrottungsvorganges der Kernschrot in konzentrierter
Form angeordnet wird, und darüberhinaus gegebenenfalls ein
Teil des Kernschrots in der Menge des pflanzlichen Abfallstoffes verteilt wird. Diese Anwendung eignet sich für Abfallstoffe, die Stroh, Baumrinde, Gartenabfälle, abgetragenen Champignonkompost, Holzspäne od.dgl., enthalten.
Besonders wertvoll ist die Anwendung des erfindungsgemäßen
Mittels zur Heißverrottung von menschlichen oder tierischen Fäkalien sowie von Unkraut. Das Mittel kann aber auch zur geruchsfreien Verrottung stark einweißhältiger Abfälle, z.B. Champignonabfälle, Tierkadaver u.dgl.,benutzt werden.

Wird aus dem Mittel selbst Dünger hergestellt, so können dem Kernschrot vor oder während des Rottevorganges Harnstoff, organische Phosphor- und/oder Stickstoffverbindungen, tierischer Dünger und/oder Mineralien, Spurenelemente, Pflanzenasche oder pflanzliche Abfälle, z.B. gehäckselte Weinreben, zugesetzt werden. Da in manchen Fällen der Dünger ungewollt hohe Wirkungen zeigt, ist es zweckmäßig, nach Abschluß des Rottevorganges den Kernschrot auszulaugen. Der ausgelaugte Kernschrot kann sodann als Substrat für Humusklosette dienen. Die Lauge stellt einen hochwertigen flüssigen Dünger dar.

Im folgenden werden die Herstellung des Kernschrots, seine Eigenschaften, Anwendungen und Wirkungen näher beschrieben.

Die Gewinnung der Traubenkerne beginnt mit einer Lagerung der frischen Traubentrester zwischen Holzwänden, die innen mit Aluminium-Streckmetall ausgekleidet sind. Zwischen den Holzpfosten oder -brettern, die die Außenwand bilden, sollen schmale Belüftungsspalten liegen. Die Streckmetall-Matten an den Innenseiten sind so auszurichten, daß trotz gleichmäßiger Belüftung ein Maximum an Feuchtigkeit an den schrägen Metallflächen kondensiert und in die warmen Trestermassen zurückgeleitet wird.

In den frischen Preßrückständen steigt die Temperatur langsam; die Hefepilze vermehren sich und vergären den Zuckergehalt der Traubentrester zu Alkohol und Kohlendioxid. Gleichzeitig sorgen verschiedene anaerob lebende Bakterienarten für Gärungsvorgänge, die zu organischen Säuren führen. Während dieser Phase neigen vor allem kleinere Trestermassen dazu, auf einem Temperaturniveau um 45°C zu verharren. Nun tritt die beschriebene Spezialwandung aus Holz und Aluminium-Streckmetall entscheidend in Funktion, indem sie einerseits für eine gewisse Isolierung und anderseits für eine mäßige

0149702

Belüftung durch die Streckmetallmatten sorgt. Unter diesen Bedingungen entwickeln sich Humicola und aerobe wärmeliebende Actinomycetenarten, die mit ihrem weißlichgrauem Mycel von außen in das Substrat hineinwachsen und damit ganz wesentlich mithelfen, die Temperatur in allen Bereichen über $50^{o}$C hinaufzutreiben. Die vorhandene saure Reaktion von pH 4 bis 5 entspricht ihren Anforderungen.

Sobald der Bereich von $50^{o}$C überschritten ist, beginnen Alkohol einerseits und organische Säuren anderseits rasch miteinander zu reagieren. Es entstehen Ester, die dem Material eine kräftig braune Farbe und einen eigenen, aromatischen Geruch verleihen. In diesem Zustand sind die vorher geruchsbelästigend wirkenden organischen Säuren durch die Veresterung chemisch gebunden. Die Temperaturen liegen in dieser Phase weit oberhalb von $33^{o}$C, so daß eine Massenvermehrung von Essigfliegen vereitelt ist.

Mit der systematischen Veresterung ist der erste Verfahrensschritt abgeschlossen. Das Ergebnis ist ein relativ gut lagerbares Material, das allein schon durch die stabile Esterkomponente einen hohen Energiegehalt/mehr als 17.000 k Joule/kg besitzt. In der unmittelbar oder im Anschluß an eine Zwischenlagerung nachfolgenden Phase 2 des Verfahrens wird dieses Material als Energieträger eingesetzt, indem es vollständig von dem Mycel der Humicola und der schon erwähnten thermophilen Actinomycetenarten durchwachsen wird.

Im Zentrum des veresterten Trestermaterials lassen sich Wärmetauscher einbauen, die durch einen Luftstrom oder einen Wasserkreislauf Wärme nach außen abgeben. Man kann auch ein Gefäß im Zentrum anordnen und mit der Wasserleitung verbinden. Das Wasser wird dadurch bis auf $64^{o}$C angewärmt. Ein Kubikmeter Trester, der vollständig von Humicola und den Actinomycetenarten durchwachsen wird, gibt einen Monat lang Wärme ab. Als ungefähre Regel darf man annehmen, daß zwei Kubikmeter zwei Monate und fünf Kubikmeter bis zu fünf Monaten heiß bleiben, ohne daß die Humicola- und Actinomycetenrotte durch die ständige Wärmeabfuhr vorzeitig zum Erliegen kommt.

Man kann so einen Winter lang einen kleinen Raum oder einen Stall temperieren, ohne zwischendurch Arbeit oder Energie einsetzen zu müssen. Auch die Warmwasserbereitung funktioniert über lange Zeiträume und letztlich bis zur nächsten Weinlese, wenn nach geschickter Lagerung neue Packungen von verestertem Material um den Wasserbehälter gegeben werden. Am angenehmsten ist die Wärmenutzung jedoch bald nach der Lese, wenn die kalte Jahreszeit beginnt, dann ist die mikrobielle Freisetzung der in der warmen Vegetationszeit chemisch gebundenen Sonnenenergie besonders erwünscht.

Werden die Trester nach Abschluß der Phase 2 gemischt, so erreichen sie nach zwei bis drei Tagen Temperaturen von 68 bis 84°C. Diese Nachrotte ist für eine lang anhaltende, gleichmäßige Wärmenutzung nicht geeignet, ist aber für die Humifizierung der Schalen- und Fruchtfleischreste besonders wichtig. Am Ende nehmen die Trester eine dunkle Farbe an. Sporen verschiedener thermophiler Mikroorganismen bleiben auf der Oberfläche der Kerne im Ruhestadium, bis sie in einem weiteren Verrottungsvorgang wieder in Funktion treten.

Nun wird das Material getrocknet. Dabei kann die Restwärme der Nachrotte und die Abwärme einer darunter ablaufenden Hauptrotte der Phase 2 benutzt werden.

Durch einen Siebvorgang werden die Traubenkerne von den bereits humifizierten Tresterbestandteilen abgetrennt. Etwa 40% des Volumens entfällt dabei auf einen gebrauchsfertigen organischen Dünger und 60% auf Traubenkerne als Energieträger, die über längere Zeit aufbewahrt werden können.

Vor der erfindungsgemäßen Nutzung der Kerne werden diese geöffnet, z.B. durch eine Schrotung der Kerne. Die Kerne sind Samen, an deren äußerer Wand entsprechend der vorherigen Behandlung Dauerstadien thermophiler Mikroorganismen sitzen, während die innere Wand den Keimling und die Keimblätter umschließt. Letztere sind durch die Hitze abgestorben und befinden sich im Anfangsstadium eines langsamen Abbaues. Durch

0149702

Trocknung werden die schleichenden Abbauvorgänge zum Erliegen gebracht. Durch das Traubenkernöl ist der Kerninhalt sehr energiereich, und man kann mehr als 20.000 k Joule/kg rechnen. Außerdem enthält er sämtliche für den Aufbau eines Sämlings notwendigen Nährstoffe und damit auch die für ein Mikrobenwachstum erforderlichen Substanzen. Wenn beim Schroten die einzelnen Bestandteile der Traubenkerne dem Sauerstoff der Luft und einer Feuchtigkeit von mehr als 23% ausgesetzt sind, setzen die lebhaften Rottevorgänge unverzüglich ein. Die Befeuchtung des Kernschrots erfolgt mit kaltem oder warmem Wasser. Nun kann der feuchte Kernschrot am Anwendungsort eingesetzt werden. Durch das Öffnen der Kerne sind die Mikrobensporen von der Oberfläche mit den öl- und reservestoffhaltigen Samenresten aus dem Inneren zusammengekommen. Im Verlauf einiger Stunden setzt eine Rotte ein, die ebenso wie Phase 2 einen systematischen Abzug von Wärme erlaubt, z.B. zur Raumtemperierung, zur Warmwasserbereitung, vor allem aber zur Klimatisierung, und die Kohlendioxid-Versorgung von Pflanzenkulturen unter Glas und unter Plastikfolien. Der Kernschrot in den Behältern aus Streckmetall gibt einerseits Wärme ab und versorgt die Glashausluft mit $CO_2$, so daß eine Lüftung für den Kohlendioxid-Nachschub, die mit Wärmeverlusten verbunden wäre, überflüssig wird.

Kernschrot kann in Materialien eingelagert werden, die von sich aus die Schwelle zu einer lebhaften heißen Rotte nicht überschreiten können, um sie in den thermophilen Bereich hineinzuziehen oder ihre Verrottung zu beschleunigen. Man kann Nester einbauen, für die bereits ein Rauminhalt von 0,02 m³ ausreicht, in dem sich innerhalb des Kernschrotkörpers rasch hohe Temperaturen aufbauen, man kann eine gleichmäßige Durchmischung machen, oder bevorzugt eine Schicht im unteren Bereich, die von unten das darüberliegende Substrat aufheizt. Die wichtigste Wechselwirkung besteht im Wärmetausch, das nächstwichtigste mag die Abgabe der Sporen thermophiler Mikroorganismen sein, die in der Nachbarschaft auskeimen und mit dem feuchten Warmluftstrom nach oben mitgetragen
werden. Man kann aber das zu verrottende Material auch
allseits von Kernschrot umgeben. Das empfiehlt sich bevorzugt bei eiweißreichen Substanzen, bei Fleischabfällen,
Pilzabfällen (Champignons) oder unangenehm riechenden
Fäkalien. Fleischabfälle und Tierkadaver können z.B. in
einem Kunststoffsack auf einer trockenen Torfmullunterlage
aufgelegt und mit Kernschrot bedeckt werden. Kernschrot
eignet sich aber auch als Filterschicht für Urin und als
geruchsbindende Unterlage für stark riechende tierische
Kot- und Urinplätze. Die Verwendung des Kernschrots verhindert wirksam eine Geruchsbelästigung.

Durch die Wärme- und Sporenabgabe ist der Kernschrot
häufig in der Lage, den umgebenden Substanzen eine so rasche
Abbaugeschwindigkeit aufzuzwingen, daß man fast von katalysatorischen Fähigkeiten sprechen kann.

Ist die Mischung relativ dicht gepackt, so pflegt ein
thermophiler Pilz der Gattung Humicola die Leitform zu sein.
Liegt das Material ein wenig luftiger, so haben eher Actinomyceten größere Entwicklungschancen. Derlei Methoden lassen sich
in zahllosen Variationen anwenden, alle lassen sich für ein
effektvolles Recycling verwenden.

Ein Recyclingbeispiel ist der jährlich im Vorfrühling
stattfindende Rebschnitt in den Weingärten. Die Reben enthalten bedeutende Mengen an Nährstoffen und Spurenelementen,
sie verrotten nicht leicht und werden größtenteils am Weingartenrand verbrant; danach wird die Asche ziellos vom Wind
verblasen. Es ist deshalb zu empfehlen, die Rebenasche nach
dem Verbrennen mit etwa einem gleichen Teil feuchten Kernschrots zu überdecken, zu vermischen und in einem luftigen
Behältnis gemeinsam heiß verrotten zu lassen. Ein Teil der
mineralischen Bestandteile der Rebenasche wird dadurch
organisch gebunden, ein Teil wird an den Huminstoffmolekülen
gehalten. Außerdem schafft das Mycel der Mikroorganismen

0149702

eine verbindende Struktur. Der Aschenbestandteil kann nicht
mehr verblasen werden, wenn er eingebunden in den Kernschrot
in den Weingarten zurückgebracht wird. Die Reben können auch
in gehäckselter Form dem frischen Kernschrot zugegeben und
mit diesem verrottet werden.

In einer gemeinsamen heißen Rotte kann unangenehm
riechender Geflügelmist als Zuschlag zum Kernschrot (bis
zu 40% des Kerngewichtes) unangenehme Eigenschaften verlieren und gleichzeitig den Phosphorgehalt der gemeinsam
verrotteten Gesamtmasse vermehren, da der Phosphatgehalt
der Kerne etwa 0,7 % der Trockensubstanz beträgt. Zugleich
werden darin versteckte Ektoparasiten, enthaltene Wurmeier,
Kokzidienkeime u.dgl. abgetötet. Während dieser aktiven
Phase können die verschiedensten Komponenten miteinander
reagieren und Spezialdünger bilden oder besondere spurenelementangereicherte Substrate hervorbringen. Gemische
mit hohen Bestandteilen an Erde, Lehm, Ton oder Basaltmehl (etwa 10 % der Kernmenge) liefern bedeutende Temperaturen und ein vollständig vom Mycel der thermophilen Mikroorganismen durchzogenes Substrat. Durch diese Zugabe kann
der Rottevorgang verzögert werden und die Gasdiffusion
innerhalb der Masse vollzieht sich gleichmäßiger und mit
geringeren Differenzen, da die maximalen Temperaturen
auch nicht so hoch liegen. Mit dem Besaltmehl werden
Pflanzennährstoffe und Spurenelemente zugeführt, die Ton-
Humuskomplex-Bildung gefördert, ein Komplex, der die Eigenschaften der landwirtschaftlich genutzten Böden in äußerst
günstiger Weise beeinflußt. Die Zugabe von Kali ist selten
erforderlich, weil Kernschrot etwa 3% Kali in der Trockensubstanz enthält.

Kleinere Substanzmengen, die durch die geschilderten
Hilfsmittel besonders heiß werden, sind in Gefahr, an den
großen Oberflächen rasch die vorhandene und die bei der
aeroben Rotte entstehenden Feuchtigkeitsmengen zu verlieren.
Aus diesem Grunde sind Wandelemente, die zur Rückführung

0149702

von Feuchtigkeit führen, wichtig. Auch die Bedeckung spielt eine Rolle. Als einfachste und zweckmäßigste Lösung wird eine Plastikfolie so geschnitten, daß sie ein wenig größer ist als die obere Öffnung des Behältnisses; die Plane wird darüber gebreitet und mit einem entsprechend kleineren Metallring beschwert, so daß in der Mitte ein Hut entsteht, in den der feuchtwarme zentrale Aufwind aus dem heißen Rottezentrum hineinsteigt, an der kühleren Folieninnenseite Kondenswasser abgibt, das seitlich abfließt und an der Folienstelle an der der Metallring sozusagen eine Tropfnase in der Folie formt, in das Material zurückfließt und zwar nicht im unmittelbaren Randbereich, sondern nicht allzuweit vom Zentrum entfernt, wo durch die Kaminwirkung in den Zwischenräumen des Materials die im etwas tiefer liegenden Bereich die bedeutenderen Feuchtigkeitsverluste entstehen.

Während in frei liegenden Mieten die Oberfläche im wesentlichen kälter ist und Unkrautsamen und unerwünschte Keime aus diesem Bereich nur nach mehrmaligem Umsetzen mit immer größerer Wahrscheinlichkeit alle einmal in heißere Zentralzonen gekommen sind, läßt sich mittels Kernschrot ein heißer Körper auch im ruhenden Silo bilden, der alle Teile einmal erfaßt. Man verwendet Wandelemente aus Streckmetall-Matten, die mittels beliebiger Vorrichtungen seitlich aneinander gehängt werden können. Man bildet einen Doppelring, indem man im äußeren Ring ein zusätzliches Wandelement hineingibt. Den Raum zwischen beiden Wänden füllt man mit feuchtem Kernschrot und auf dem Boden; innerhalb des inneren Ringes, trägt man eine 5 - 10 cm starke Schicht des gleichen Kernschrots auf, von der ebenso eine heizende Wirkung ausgeht, wie von der kernschrotgefüllten Doppelwand. Da die Warmluft aufsteigt und bei der Kondensation von Wasserdampf innerseits der Plastikfolie zusätzliche Wärme frei wird, tritt eine vollständige Erhitzung der gesamten Masse ein, wenn man sorgfältig auf eine vollständige Folienbedeckung des inneren Raumes achtet. Die

0149702

Anordnung mit Doppelwand dient besonderen Zwecken, wobei natürlich eine größere Menge Kernschrot benötigt wird. Für den normalen Gartenbesitzer genügt der einfache zusammensetzbare Ring, je nach Abfallmenge. Das Streckmetall muß nur wegen der Rückgewinnung des Wassers richtig ausgerichtet sein. Dann ist die Silowand auch mehr als eine luftduchlässige Wandung, die hauptsächlich der Ordnung im Garten dient. Um auch kleinen Gartenabfall-Quantitäten thermophile Bedingungen aufzuzwingen, genügt es, im Zentrum, möglichst unterhalb der Mitte ein Nest mit feuchtem Kernschrot anzulegen. Das Besondere ist, daß kein anderes organisches Material bekannt ist, mit dem man in so kleinen Quantitäten so lang anhaltende thermophile Bedingungen schaffen und so intensiven Einfluß auf die Einbindung anderer organischer und anorganischer Materialien ausüben kann, ganz abgesehen von der Beschleunigung der Ab-, Um- und Aufbauvorgänge in den Kompostmassen. Im Vergleich dazu haben die Wandelemente eine untergeordnete Bedeutung.

Die erfindungsgemäße Methode hat gegenüber den entsprechenden Vorgängen im Komposthaufen den Vorteil, daß eine vorbestimmte Mischung aus unterschiedlichen Bestandteilen gewonnen werden kann, die unter kontrollierten Bedingungen auch bis zur kleinsten Einheit mikrobiell aneinander gebunden sind.

Ein weiteres Anwendungsgebiet der Erfindung ist die Champignonzucht. Der Champignon besitzt eine niedrige Vorzugstemperatur. Die ganzjährige gewerbsmäßige Zucht dieses Pilzes findet deshalb in Kellern oder in entsprechend klimatisierten Räumen statt. Wird der Champignonkompost nach mehrmaligen Ernten abgetragen, so ist das Substrat von dem Pilzmycel vollständig durchsponnen. Dieses Mycel ist recht lebenskräftig, auch wenn es mit dem Umwenden und Durcharbeiten des Kompostes vielfach zerrissen wird, stirbt es keinesfalls schnell ab, vor allem nicht bei den Außentemperaturen des Winterhalbjahres oder der Übergangszeiten.

Ein für gartenbauliche oder landwirtschaftliche Zwecke eingesetzter Champignonkompost sollte gut verrottet sein. Das gilt vor allem auch für das Mycel selbst, das in seinem Einweiß einen bedeutenden Teil des vorhandenen Stickstoffes gebunden hält. Sein Abbau kann jedoch auf rascheste Weise eingeleitet werden, indem luftige Behältnisse mit mindestens 50 Liter Inhalt mit Kernschrot angefüllt und an zentraler Stelle in Abständen in die Mieten mit abgetragenem Champignonkompost eingebaut werden. Der Kernschrot geht rasch zu einer heißen Rotte über und sorgt an den Behälterwänden, die als Wärmetauscher wirken, dafür, daß der außen anliegende Champignon-Kompost rasch Temperaturen von über 30°C erlangt. Das Substrat selbst hat vor der Beimpfung mit Champignon beim Pasteurisieren bereits eine heiße Rotte durchgemacht, während der alle leicht abbaubaren Bestandteile des Kompostes schon von den thermophilen Mikroorganismen aufgenommen worden sind. Bei einer neuerlichen Temperaturerhöhung ist es dieses Mal das Champignonmycel mit seinen um 15°C liegenden Vorzugstemperaturen, das am empfindlichsten getroffen wird. Die wärmespendenden Tresterbehälter geben durch die Öffnungen gleichzeitig Sporen thermophiler Actinomyceten an das benachbarte Substrat ab, die sogleich an die Verarbeitung der Pilzsubstanz gehen. Damit wird zusätzliche Wärme erzeugt, die nach außen weiterwandert und weiter an der Peripherie den Zusammenbruch des wärmeempfindlichen Mycels hervorruft.

Nach dieser kurzen Initialphase, die einen erheblichen Zeitgewinn für die Ausreifung des Kompostes darstellt, können sich beliebige Dauertemperaturen einstellen, die auf jeden Fall zu günstigeren Eigenschaften des Materials führen. Nach Untersuchungen werden vom Champignonmycel Stoffwechselprodukte ausgeschieden, die einen hemmenden Einfluß auf die Keimung und auf das Wachsen junger Pflanzen ausüben. Beim Nachkompostieren verschwinden diese hemmenden Stoffwechselprodukte. Grundvoraussetzung für die rasche Abfolge dieser Geschehnisse ist jedoch die kurzzeitige, möglichst vollständige Abtötung des lebenden Pilzgespinstes durch thermophile Mikroorganismen vereint mit hohen Umgebungstemperaturen.

Verzichtet man auf die gezielte Lenkung in thermophile Bahnen, so dauert der Vorgang um ein Vielfaches länger: Eingebettet in das Substrat geht der Abbau des Mycels unauffällig und langsam vor sich.

Anders ist es mit den Pilzabfällen, die bei der Ernte anfallen, an denen höchstens kleine Mengen von Deckerde haften. Hier tritt nach einiger Zeit ein mikrobieller Eiweißabbau ein, der von äußerst unangenehmen Gerüchen begleitet ist. Hier empfiehlt sich eine Einstreu von Kernschrot, der in besonderer Weise dazu befähigt ist, das umgebende Substrat rasch zu einer heißen Rotte hinzuführen und gleichzeitig für eine Bindung unangenehmer Fäulnisgerüche zu sorgen.

Vor oder während der Verrottung des Kernschrotes können die oben erwähnten Beischläge zugegeben werden.

So wird samentragendes Unkraut zur restlosen Beseitigung der Keimfähigkeit zusammen mit Kernschrot heiß verrottet. Auch menschliche Fäkalien können zur sicheren Abtötung von Wurmeiern und pathogenen Keimen zusammen mit Kernschrot heiß verrottet werden. Ist das Material über 60°C heiß geworden, so kann es später selbst für den Gemüseanbau verwendet werden. Entsprechendes gilt für tierische Fäkalien, bei denen eine Abtötung von Parasiten oder ihren Eiern wünschenswert erscheint.

Ist der Kernschrot erkaltet, so hat er das Stadium des gebrauchsfertigen Düngers erreicht. Aber auch in diesem Stadium geringerer mikrobieller Aktivität besitzt der Kernschrot noch bedeutende geruchsbindende Fähigkeiten; das kommt in besonderem Maße zum Ausdruck, wenn man ihm Fäkalien beimengt: er lenkt den Abbau sofort in geruchsarme aerobe Bahnen. Für diesen Zweck ist es geboten, den hochwertigen Dünger durch Auslaugen zu schwächen, da er auch in diesem Zustand eine genügend geruchsbindende Kraft besitzt und die Lauge als wertvoller flüssiger Dünger benutzt werden kann.

0149702

In der AT-PS 344 210 wurde dargelegt, daß der Energiegehalt der Traubentrester in zwei verschiedenen, unter Umständen zeitlich weit auseinanderliegenden Arbeitsgängen genutzt werden kann. Zunächst macht die gesamte Trestermasse eine lebhafte heiße Rotte durch, dann werden die Kerne abgesondert, schließlich geschrotet, befeuchtet und einer neuerlichen heißen Rotte unterworfen. Die abgesonderten und geöffneten Traubenkerne zeigen eine besondere Eignung, auch in kleinen Quantitäten heiß zu werden und Pflanzenkulturen unter Glas und Folie mit Wärme und Kohlendioxid zu versorgen. Sie sind dementsprechend schnell erschöpft.

Es gibt jedoch Anwendungen, bei denen es erwünscht ist, die Bioenergie, die bei der Rotte frei wird, in einer langanhaltenden Phase zu nutzen. Dieses Interesse besteht vor allem dann, wenn das Material zur Beschickung von Mistbeeten benutzt wird und in seiner Wärmeabgabe besonders lange anhalten soll. Es besteht aber auch dann, wenn Warmwasserbereitung und Raumtemperierung mit relativ kleinen Trestermengen und dennoch langanhaltenden Zeiten der Wärmeabgabe aufrechterhalten werden sollen und das ausgearbeitete Material anschließend sofort als gebrauchsfertiger Dünger in den Boden eingearbeitet werden soll.

Die Erfindung betrifft demnach ein Verfahren zur Herstellung von hochwertigem Dünger, gegebenenfalls unter Ausnützung der entstehenden Wärme und des $CO_2$ durch aerobe Verrottung von Traubentrester, das dadurch gekennzeichnet ist, daß in einer ersten Phase der Zuckergehalt der Trester in Alkohol umgewandelt und dieser einer Veresterung unterworfen, sodann die Kerne geöffnet und das gesamte, auch die geöffneten Kerne enthaltende Material als Zwischenprodukt in einer zweiten Phase der Verrottung zugeführt wird. Es ist zweckmäßig, daß die erste Phase in Silos durchgeführt wird, aus denen das Material entnommen, gleichzeitig oder anschließend einer auch die Kerne erfassenden Zerkleinerung, z.B. mittels einer Silofräse, unterworfen und das Zwischenprodukt an den Ort seiner Verrottung gebracht, vorzugsweise in Rottebehälter gefüllt wird. Die Erfindung bezieht sich ferner auf Einzelheiten des erfindungsgemäßen Verfahrens.

Wie oben dargelegt, erfolgt die Rotte der Trester und Kerne gemäß der AT-PS 344 210 sehr lebhaft und es war zu erwarten, daß die gemeinsame Rotte der geöffneten Kerne und des übrigen Trestermaterials noch schneller vor sich geht. Überraschenderweise verläuft sie jedoch langsamer und gleichmäßiger als die beiden Einzelrottevorgänge. Darüberhinaus ergibt die erfindungsgemäße Verrottung einen sofort verarbeitbaren Dünger, da auch die Kerne verrottet sind und einen unauffälligen Bestandteil der Erdkrumme bilden.

Die hiemit vorgeschlagene gleichzeitige Verrottung der geöffneten Traubenkerne und der übrigen Bestandteile des Tresters bietet sich vor allem für kleinere Anlagen an. Die Preßrückstände werden in einen Rundsilo geleert, dessen Wand aus senkrechten Holzpfosten besteht, zwischen denen Luftschlitze von etwa 6 mm Weite vorgesehen sind. Die Innenseite der Wand ist ausgekleidet mit Aluminium-Streckmetall mit einer Längsdiagonale von etwa 20 mm, einer Querdiagonale von ca. 3 mm und einer Stegbreite von etwa 2 - 3 mm. Die Anordnung des Streckmetalles entspricht den Angaben der AT-PS 347 978. In diesem Behälter sollen während und nach der Lese Temperaturen von 50 und mehr Grad Celsius erreicht werden, um zur Esterbildung zu führen. Dannach wird eine Silofräse eingesetzt, die je nach Bedarf dem Silo Material entnimmt, und die gewünschte Trestermenge in Rottebehälter entleert. Auf dem Transport innerhalb der Silofräse passiert das Material ein schnell rotierendes Gebläse mit schmalen, flachgestellten Ventilatorflügeln, so daß die Kerne nahezu vollständig ergriffen und zerschlagen werden.

Bei der lebhaften heißen Rotte zu Beginn der zweiten Phase kommt den Äthylestern, die während der ersten Phase entstanden sind, die größte Bedeutung zu, indem sie die Primärbesiedlung durch die thermo- und acidophilen Actinomycetenarten sowie Humicola fördern. Nachdem diese Arten das Substrat durchwachsen haben, folgen zahlreiche Mikrobenarten, die nach und nach die noch unangegriffenen Reservestoffe aus dem Samen einschließlich des Öls abbauen und in Wärme umwandeln und zusätzlich auch das überalterte Mycel von der Primärbesiedlung verarbeiten. Mit dem relativ kleinen Volumen von 500 bis 1000 Liter Trester können Wärmequellen geschaffen werden, die weitaus länger als vier Wochen aktiv sind und je nach Bedarf über die gesamte Wachstumszeit von Salat oder anderen "Mistbeet"-Kulturen für die notwendige Wärme sorgen.

Das nach der ersten Phase erhaltene Zwischenprodukt kann dazu benutzt werden, um den Rottevorgang organischer Materialien in Gang zu setzen, zu fördern und auf höherer Temperatur ablaufen zu lassen. Diese Anwendung eignet sich für organische Abfallstoffe, die Stroh, Baumrinde, Gartenabfälle, abgetragenen Champignonkompost, Holzspäne od.dgl. enthalten. Besonders wertvoll ist die Anwendung des erfindungsgemäßen Zwischenproduktes zur Heißverrottung von menschlichen oder tierischen Fäkalien sowie von Unkraut. Das Zwischenprodukt kann aber auch zur geruchsfreien Verrottung stark eiweißhältiger Abfälle, z.B. Champignonabfälle, Tierkadaver u.dgl. benutzt werden.

Mit der systematischen Veresterung ist der erste Verfahrensschritt abgeschlossen. Das Ergebnis ist ein relativ gut lagerbares Zwischenprodukt, das allein schon durch die stabile Esterkomponente einen hohen Energiegehalt von mehr als 20.000 k Joule/kg Trockensubstanz besitzt. In der unmittelbar nachfolgenden Phase zwei des Verfahrens wird dieses Material als Energieträger eingesetzt, indem es vollständig von dem schon erwähnten Mycel durchwachsen wird.

Im Zentrum des veresterten Zwischenproduktes lassen sich Wärmetauscher einbauen, die durch einen Luftstrom oder einen Wasserkreislauf Wärme nach außen abgeben. Man kann auch ein Gefäß im Zentrum anordnen und mit der Wasserleitung verbinden.

Das Wasser wird dadurch bis auf 64°C angewärmt, ohne daß die Humicola- bzw. Actinomycetenrotte durch die ständige Wärmeabfuhr vorzeitig zum Erliegen kommt. Das Zwischenprodukt kann in Materialien eingelagert werden, die von sich aus die Schwelle zu einer lebhaften heißen Rotte nicht überschreiten können, um sie in den thermophilen Bereich hineinzuziehen oder ihre Verrottung zu beschleunigen. Man kann Nester einbauen, für die bereits ein Rauminhalt von 0,005m³ ausreicht, in denen sich rasch hohe Temperaturen aufbauen, man kann eine gleichmäßige Durchmischung vornehmen, oder bevorzugt eine Schicht im unteren Bereich, die von unten das darüberliegende Substrat aufheizt. Die wichtigste Wechselwirkung besteht im Wärmetausch, das nächstwichtigste mag die Abgabe der Sporen thermophiler Mikroorganismen sein, die in der Nachbarschaft auskeimen und mit dem feuchten Warmluftstrom nach oben mitgetragen werden. Man kann aber das zu verrottende Material auch allseits mit dem Zwischenprodukt umgeben. Das empfiehlt sich bevorzugt bei eiweißreichen Substanzen, bei Fleischabfällen, Pilzabfällen (Champignons) oder unangenehm riechenden Fäkalien.

Fleischabfälle und Tierkadaver können z.B. in einem Kunststoffsack auf einer trockenen Torfmullunterlage aufgelegt und mit Zwischenprodukt bedeckt werden. Dieses eignet sich aber auch als Filterschicht für Urin und als geruchsbindende Unterlagen für stark riechende tierische Kot- und Urinplätze. Die Verwendung des Zwischenproduktes verhindert wirksam eine Geruchsbelästigung.

1

22.5.1984/Mə/ke

## Patentansprüche

1. Verwendung eines Materials, das im wesentlichen Umfang aus zerkleinerten, ihren natürlichen Gehalt an Ölen aufweisenden Traubenkernen, die mit Humicola- und/oder Actinomycetensporen behaftet sind, und im übrigen aus anderen Bestandteilen der Traubentrester besteht, zur Herstellung hochwertigen Düngers.

2. Verwendung des Materials zur Herstellung hochwertigen Düngers nach Anspruch 1, dadurch gekennzeichnet, daß das Material einem aeroben Rottevorgang unterworfen wird und vor oder während dieses Vorganges ein oder mehrere der folgenden Stoffe zugesetzt werden: Harnstoff, organische Phosphor- und/oder Stickstoffverbindungen, tierischer Dünger und/oder Mineralien, Spurenelemente, Pflanzenasche und dgl., Pflanzenabfälle, z.B. gehäckselte Weinreben.

3. Verwendung des Materials zur Herstellung hochwertigen Düngers nach Anspruch 1, dadurch gekennzeichnet, daß das Material einem aeroben Rottevorgang unterworfen wird, die Kerne ausgesiebt und zur Erlangung eines flüssigen Düngers ausgelaugt werden.